# EUROPÄISCHE PATENTSCHRIFT

(11) **EP 3 186 056 B1**
(45) Veröffentlichungstag und Bekanntmachung des Hinweises auf die Patenterteilung: **17.10.2018**
(21) Anmeldenummer: 15787950.3
(22) Anmeldetag: 26.10.2015
(51) Int. Cl.: H02K 9/06, B29L 31/08, B29D 99/00, B29C 45/00

(54) **GEBLÄSE ZUM KÜHLEN EINER ROTIERENDEN ELEKTRISCHEN MASCHINE**
FAN FOR COOLING A ROTATING ELECTRICAL MACHINE
VENTILATEUR POUR REFROIDIR UNE MACHINE ÉLECTRIQUE ROTATIVE

(30) Priorität: 11.11.2014 EP 14192625
(43) Veröffentlichungstag der Anmeldung: 05.07.2017
(73) Patentinhaber: Siemens Aktiengesellschaft, 80333 München (DE)
(72) Erfinder: BROCKSCHMIDT, Mario, 45131 Essen (DE); HÖHNER, Rene, 45891 Gelsenkirchen (DE); KOCDEMIR, Bora, 45357 Essen (DE); LITINSKY, Alexander, 40223 Düsseldorf (DE); MASHKIN, Andrey, 50672 Köln (DE); POHLMANN, Friedhelm, 45355 Essen (DE); SCHMIDT, Guido, 42799 Leichlingen (DE); STAUBACH, Christian, 45768 Marl (DE); VOSS, Simon, 45479 Mülheim (DE)
(86) Internationale Anmeldenummer: PCT/EP2015/074689
(87) Internationale Veröffentlichungsnummer: WO 2016/074911

(56) Entgegenhaltungen:
- WO-A1-2011/063334
- WO-A2-2007/013892

## Beschreibung

Die Erfindung betrifft ein Gebläse zum Kühlen einer rotierenden elektrischen Maschine, insbesondere eines Generators, wobei das Gebläse auf einer Rotorwelle eines Rotors der rotierenden elektrischen Maschine anordbar ist.

Rotierende elektrische Maschinen in Form von Generatoren werden beispielsweise in Kraftwerken zum Erzeugen von elektrischer Energie eingesetzt. Während des Betriebs einer rotierenden elektrischen Maschine wird zwangsläufig Wärme in dem Stator und/oder dem Rotor bzw. der jeweilig daran angeordneten Wicklung der rotierenden elektrischen Maschine erzeugt. Diese Verlustwärme entsteht bei der Umwandlung von mechanischer Energie in elektrische Energie mittels der rotierenden elektrischen Maschine.

Die in einem Stator und/oder einem Rotor einer rotierenden elektrischen Maschine erzeugte Wärme muss zu einem sicheren Betrieb der rotierenden elektrischen Maschine aus der rotierenden elektrischen Maschine abgeführt werden. Dies ist insbesondere deshalb erforderlich, da an dem Stator und/oder dem Rotor elektrische Isolierungen vorhanden sind, welche ab Erreichen einer bestimmten Temperatur beeinträchtigt werden könnte, was zu einer schnelleren Alterung führen würde. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Herkömmlich kann zur Wärmeabführung aus einer rotierenden elektrischen Maschine bzw. zur Kühlung des Stators und/oder des Rotors Luft, Wasserstoff, Wasser oder eine Kombination dieser Kühlmittel verwendet werden, wobei das Kühlmittel durch die rotierende elektrische Maschine strömt.

Zur Kühlung einer rotierenden elektrischen Maschine mit Luft oder Wasserstoff kann auf der Rotorwelle des Rotors der rotierenden elektrischen Maschine ein ein- oder mehrstufiges Gebläse eingesetzt werden, das im Saug- oder Druckbetrieb arbeitet und mit dem eine Kühlmittelströmung durch die rotierende elektrische Maschine erzeugbar ist. Ein einstufiges Gebläse umfasst einen einzigen auf der Rotorwelle angeordneten Laufschaufelkranz mit mehreren Laufschaufeln. Ein mehrstufiges Gebläse umfasst zudem wenigstens einen ortsfest gehaltenen Leitschaufelkranz mit mehreren Leitschaufeln.

Es ist bekannt, Leitschaufeln eines Gebläses aus austenitischem, rostfreiem Stahl und Laufschaufeln des Gebläses aus martensitischem, rostfreiem Stahl herzustellen. Hierbei wird eine Leitschaufel beziehungsweise Laufschaufel üblicherweise durch Fräsen aus einem Vollmaterial hergestellt.

WO 2011/063334 A1 offenbart eine Ringform zur Herstellung eines Zentrifugal-Impellers für eine Turbomaschine, wobei eine Impeller-Schaufel zumindest teilweise aus einem Faserverbundwerkstoff gebildet ist, der eine Polymermatrix mit darin eingebetteten Mineralfasern aufweist.

Aufgabe der Erfindung ist es, ein Gebläse zum Kühlen einer rotierenden elektrischen Maschine, insbesondere eines Generators, wobei das Gebläse auf einer Rotorwelle eines Rotors der rotierenden elektrischen Maschine anordbar ist, zu schaffen, das gegenüber herkömmlichen Gebläsen mit Stahlschaufeln verbesserte dynamische Betriebseigenschaften aufweist, das aufwandarm herstellbar ist, das in hohem Maße mechanisch belastbar ist und das eine lange Betriebsstandzeit aufweist.

Die Aufgabe wird erfindungsgemäß durch ein Gebläse mit den Merkmalen des Anspruchs 1 gelöst.

Die Gebläseschaufel wird nicht, wie herkömmlich, aus einem Stahl gefertigt, sondern teilweise oder vollständig aus einem Faserverbundwerkstoff, der die Polymermatrix mit darin eingebetteten Mineralfasern aufweist. Dieser Faserverbundwerkstoff ist deutlich kostengünstiger als ein Stahlwerkstoff. Zudem kann die Schaufel bei erfindungsgemäßer Verwendung des Faserverbundwerkstoffs mittels eines kostengünstigeren Herstellungsverfahrens hergestellt werden, beispielsweise durch ein Spritzgussverfahren. Dies ist insbesondere gegenüber dem herkömmlichen Fräsen einer Schaufel aus einem Vollmaterial aus einem Stahlwerkstoff, wobei zwangsläufig eine größere Menge an Ausschussmaterial entsteht, kostengünstiger, insbesondere da die Herstellungsdauer deutlich verkürzt werden kann.

Verschiedene Mineralfasern haben den Vorteil, dass sie eine höhere Zugfestigkeit als Stahl aufweisen können, was die Schaufel sehr belastbar und dauerhaft macht.

Die erfindungsgemäße Verwendung des Faserverbundwerkstoffs hat zudem den Vorteil, dass das Gewicht der Schaufel gegenüber einer Schaufel aus eine Stahlwerkstoff reduziert werden kann, was sich positiv auf den Betrieb einer entsprechend ausgestatteten rotierenden elektrischen Maschine auswirkt.

Die Mineralfasern sind bevorzugt zumindest teilweise als Basaltfasern ausgebildet. Basaltfasern haben gegenüber Stahl ein geringeres spezifisches Gewicht, weisen eine mehrfach höhere Zugfestigkeit als Stahl auf und sind deutlich kostengünstiger herstellbar als beispielsweise Kohlenstofffasern. Kohlenstofffasern weisen zudem eine deutlich geringere Zugfestigkeit als Basaltfasern auf. Basaltfasern können beispielsweise eine Zugfestigkeit von etwa 4000 MPa aufweisen. Basaltgestein kommt natürlich vor und ist in der Erdkruste mit einem Anteil von etwa 13% enthalten und damit in ausreichendem Maß verfügbar. Die Mineralfasern können auch vollständig als Basaltfasern ausgebildet sein.
Die Polymermatrix ist bevorzugt ein ausgehärtetes Epoxidharz, insbesondere Bisphenol-A-diglycidylether, Bisphenol-F-diglycidylether und/oder cycloaliphatische Epoxidharze. Das Epoxidharz kann mit einem amininischen Härter, insbesondere Diethylentriamin, und/oder einem Carbonsäureanhydrid, insbesondere Hexahydrophthalsäureanhydrid ausgehärtet sein.

Die Schaufel ist bevorzugt als Laufschaufel oder als Leitschaufel ausgebildet.

Das erfindungsgemäße Gebläse zum Kühlen einer rotierenden elektrischen Maschine, insbesondere eines Generators, das auf einer Rotorwelle eines Rotors der rotierenden elektrischen Maschine anordbar ist, umfasst wenigstens einen umlaufend an der Rotorwelle anordbaren, aus Schaufeln gebildeten Schaufelkranz, wobei die Schaufeln gemäß einer der vorgenannten Ausgestaltungen oder einer beliebigen Kombination derselben.

Mit dem Gebläse sind die oben mit Bezug auf die Schaufel genannten Vorteile entsprechend verbunden. Der Schaufelkranz kann ein Laufschaufelkranz oder ein Leitschaufelkranz sein. Das Gebläse kann ein-, zwei- oder mehrstufig ausgebildet sein. Es können auch alle Schaufeln des Gebläses entsprechend ausgebildet sein.

Bei dem erfindungsgemäßen Verfahren zum Herstellen einer Schaufel für ein auf einer Rotorwelle eines Rotors einer rotierenden elektrischen Maschine, insbesondere eines Generators, anordbares Gebläse wird die Schaufel unter Verwendung eines Spritzgussverfahrens hergestellt, wobei als Spritzgussmaterial ein Faserverbundwerkstoff verwendet wird, der eine Polymermatrix mit darin eingebetteten Mineralfasern aufweist.

Die Polymermatrix ist bevorzugt ein Epoxidharz, insbesondere Bisphenol-A-diglycidylether, Bisphenol-F-diglycidylether und/oder cycloaliphatische Epoxidharze. Das Epoxidharz wird in dem Spritzgussverfahren ausgehärtet. Dies kann mit einem amininischen Härter, insbesondere Diethylentriamin, und/oder einem Carbonsäureanhydrid, insbesondere Hexahydrophthalsäureanhydrid durchgeführt werden.

Mit dem Verfahren sind die oben mit Bezug auf die Schaufel genannten Vorteile entsprechend verbunden. Ein Spritzgussverfahren ist deutlich kostengünstiger als die herkömmliche Herstellung einer Schaufel aus einem Vollmaterial aus einem Stahlwerkstoff mittels Fräsen. Die Schaufel kann nach Durchführung des Spritzgussverfahrens einer Nachbehandlung unterzogen werden.

Bevorzugt werden als Mineralfasern zumindest teilweise Basaltfasern verwendet. Mit dieser Ausgestaltung sind die oben mit Bezug auf die entsprechende Ausgestaltung der Schaufel genannten Vorteile entsprechend verbunden.

Im Folgenden werden eine bevorzugte Ausführungsform eines erfindungsgemäßen Verfahrens und eine bevorzugte Ausführungsform einer erfindungsgemäßen Schaufel anhand der beigefügten schematischen Zeichnungen erläutert.

Es zeigen:
- Fig. 1: eine Darstellung eines Ausführungsbeispiels für ein erfindungsgemäßes Verfahren; und
- Fig. 2: eine perspektivische Darstellung eines Ausführungsbeispiels für eine erfindungsgemäße Schaufel.

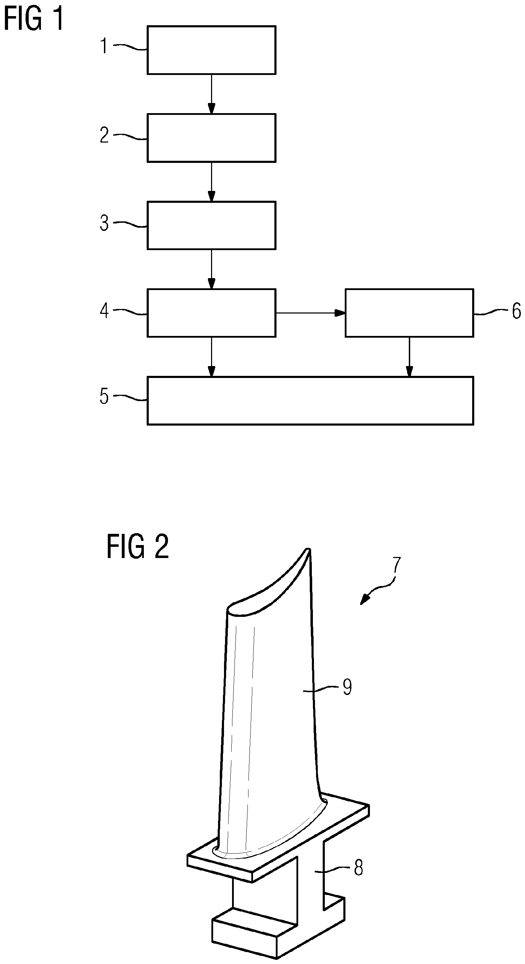

Figur 1 zeigt eine Darstellung eines Ausführungsbeispiels für ein erfindungsgemäßes Verfahren zum Herstellen einer nicht gezeigten Schaufel für ein auf einer Rotorwelle eines Rotors einer rotierenden elektrischen Maschine in Form eines Generators anordbares Gebläse.

In Schritt 1 wird ein Polymerwerkstoff mit Basaltfasern gemischt, um eine homogene Mischung aus dem Polymerwerkstoff und den Basaltfasern zu erhalten. In Schritt 2 wird die homogene Mischung geknetet, um einen Faserverbundwerkstoff zu erhalten, der eine Polymermatrix mit darin eingebetteten Basaltfasern aufweist. In Schritt 3 wird die Schaufel unter Verwendung eines Spritzgussverfahrens hergestellt, wobei als Spritzgussmaterial der in Schritt 2 hergestellte Faserverbundwerkstoff verwendet wird. In Schritt 4 wird die in Schritt 3 hergestellte Schaufel erwärmt und dadurch veredelt, wozu beispielsweise ein Hubbalkenofen eingesetzt werden kann. Eine in Schritt 4 veredelte Schaufel kann in Schritt 5 ihrer Verwendung zugeführt oder gelagert werden. Alternativ kann die in Schritt 4 veredelte Schaufel in Schritt 6 einer Nachbearbeitung unterzogen werden, bevor sie in Schritt 5 ihrer Verwendung zugeführt oder gelagert wird.

Figur 2 zeigt eine perspektivische Darstellung eines Ausführungsbeispiels für eine erfindungsgemäße Schaufel 7 für ein nicht gezeigtes, auf einer nicht gezeigten Rotorwelle eines Rotors einer rotierenden elektrischen Maschine anordbares Gebläse. Die Schaufel 7 ist zumindest teilweise aus einem Faserverbundwerkstoff gebildet ist, der eine Polymermatrix mit darin eingebetteten Mineralfasern aufweist. Die Mineralfasern sind zumindest teilweise als Basaltfasern ausgebildet. Die Schaufel 7 ist als Laufschaufel ausgebildet. Die Schaufel 7 umfasst einen Schaufelfuß 8, über den die Schaufel 7 an der Rotorwelle befestigbar ist. Des Weiteren umfasst die Schaufel 7 ein von dem Schaufelfuß 8 abstehendes Schaufelblatt 9.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gebläse zum Kühlen einer rotierenden elektrischen Maschine, insbesondere eines Generators,
wobei das Gebläse auf einer Rotorwelle eines Rotors der rotierenden elektrischen Maschine anordbar ist,
aufweisend wenigstens einen umlaufend an der Rotorwelle anordbaren, aus Schaufeln (7) gebildeten Schaufelkranz, wobei die Schaufeln (7) zumindest teilweise aus einem Faserverbundwerkstoff gebildet sind, der eine Polymermatrix mit darin eingebetteten Mineralfasern aufweist.

2. Gebläse gemäß Anspruch 1,
wobei die Mineralfasern zumindest teilweise als Basaltfasern ausgebildet sind.

3. Gebläse gemäß Anspruch 1 oder 2,
wobei eine Schaufel (7) als Laufschaufel oder als Leitschaufel ausgebildet ist.

4. Gebläse gemäß einem der vorstehenden Ansprüche,
wobei das Gebläse ein-, zwei- oder mehrstufig ausgebildet ist.

## Claims

1. Fan for cooling a rotating electrical machine, in particular a generator,
wherein the fan is arrangeable on a rotor shaft of a rotor of the rotating electrical machine and comprises at least one blade ring arrangeable rotationally on the rotor shaft and formed of blades (7), wherein the blades (7) are formed at least in part of a fiber composite material, which comprises a polymer matrix with mineral fibers embedded therein.

2. Fan according to Claim 1,
wherein the mineral fibers take the form at least in part of basalt fibers.

3. Fan according to Claim 1 or 2,
wherein a blade (7) takes the form of a rotor blade or a guide vane.

4. Fan according to one of the preceding claims,
Wherein the fan is of single-, two- or multistage configuration.

## Revendications

1. Ventilateur pour refroidir une machine électrique rotative, en particulier un générateur, dans lequel le ventilateur peut être disposé sur un arbre de rotor d'un rotor de la machine électrique rotative, présentant au moins une couronne d'aubes composée d'aubes (7) pouvant être disposée sur le pourtour de l'arbre de rotor, dans lequel les aubes (7) sont au moins en partie constituées d'un matériau composite à base de fibres, présentant une matrice polymère à fibres minérales.

2. Ventilateur selon la revendication 1, dans lequel les fibres minérales sont au moins en partie constituées de fibres de basalte.

3. Ventilateur selon la revendication 1 ou 2, dans lequel une aube (7) est exécutée sous la forme d'une aube mobile ou sous la forme d'une aube directrice.

4. Ventilateur selon l'une des revendications précédentes, dans lequel le ventilateur est exécuté à un, deux ou plusieurs niveaux.
